# EUROPEAN PATENT APPLICATION

(11) **EP 4 835 446 A1**
(43) Date of publication of application: **04.11.2026**
(21) Application number: 24912389.4
(22) Date of filing: 11.12.2024
(51) Int. Cl.: G01N 21/64, G06F 18/27

(54) **MULTIPLE FLUORESCENT DYE QUANTIFICATION METHOD AND DEVICE**

(30) Priority: 27.12.2023 JP 2023221014
(71) Applicant: Kyushu University, National University Corporation, Nishi-ku Fukuoka-shi Fukuoka 819-0395 (JP)
(72) Inventor: FUJIWARA, Kazuma, Ikoma-shi, Nara 630-0192 (JP); FUNATOMI, Takuya, Ikoma-shi, Nara 630-0192 (JP); KITANO, Kazuya, Ikoma-shi, Nara 630-0192 (JP); FUJIMURA, Yuki, Ikoma-shi, Nara 630-0192 (JP); MUKAIGAWA, Yasuhiro, Ikoma-shi, Nara 630-0192 (JP); OCHIAI, Hiroshi, Fukuoka-shi, Fukuoka 819-0395 (JP)
(74) Representative: J A Kemp LLP
(86) International application number: PCT/JP2024/043902
(87) International publication number: WO 2025/142500

(57) **Abstract**

Provided are a method and a device for rapidly and stably quantifying the spectral intensity of fluorescent emissions by increasing the number of fluorescent dyes that can be used simultaneously. The device comprises a filter control unit 2, a filter (spectral modulator) 3, a sensor array 4, a storage unit 5, and a regression model 6. The filter control unit 2 controls the spectral modulator 3. The spectral modulator 3 modulates spectral transmittance, and includes a first polarizer 32a, a liquid crystal variable retarder 31, and a second polarizer 32b. The sensor array 4 observes an observed object 8 including a plurality of fluorescent dyes through the spectral modulator 3. The storage unit 5 stores the luminance values of camera pixels captured under N types of modulation, as N-dimensional feature vectors. The regression model 6 is trained using the feature vectors under the modulation of each fluorescent dye, and quantifies the fluorescent dyes to reconstruct the intensity image 9 of each fluorescence.

## Description

### Technical Field

The present invention relates to a technology capable of quantifying a plurality of fluorescent dyes, and more particularly, relates to a technology for simultaneously utilizing and identifying a plurality of fluorescent dyes, in bio-imaging, such as a spatial omics analysis, for quantitatively analyzing a gene expression or the like of each cell, using tissue sections.

### Background Art

In recent years, gene expression profiles have been able to be analyzed by spatial transcriptomics analysis, which is a type of spatial omics analysis, while maintaining positional information in tissues, and has been applied in fields, such as developmental biology and drug discovery. In spatial transcriptomics analysis, it is possible to detect RNA molecules by hybridizing them with fluorescently labeled DNA probes. However, there is a problem that, when simultaneously detecting a large number of mRNAs, an overlap of fluorescence spectra may become a limiting factor.

In a sequential RNA fluorescence in situ hybridization method, which has been widely used in spatial transcriptomics analysis, RNAs are observed using positional information at a molecular level as fluorescence molecules. However, there is a problem that multiple staining and imaging are required to identify a large number of molecules, since the number of dyes that can be obtained in a single staining operation is limited using absorption filters.

On the other hand, the SeqFish+ method has been known for efficiently detecting a large number of mRNAs by repeating molecular hybridization and probe removal. Since it is difficult for the SeqFish+ method to identify a plurality of fluorescent dyes of 20 colors using a fluorescence microscope, a large number of mRNAs are identified by means of barcoding (readable sequence in which a lighting pattern is uniquely designed for each mRNA) using 20 types of pseudo colors through 20 rounds of hybridization, and thereby it is possible to analyze a localization of approximately 10,000 types of mRNAs through 80 rounds of imaging, for example. However, since each one round of hybridization requires 20 or fewer minutes, and also requires experimental procedures, the repeated processing of data acquisition (hybridization and re-probing) requires many time amounts, thereby requiring time amounts and effort.

Moreover, a nucleic acid sequencing method has been known implemented by including a spatial modulation module for implementing random modulation of a light field using a spatial random phase modulator to obtain speckle images of fluorescence signals, a liquid-crystal spatial light modulator for constructing a specific two-dimensional code matrix, and an area array detector which detects a multicolor fluorescence two-dimensional intensity measurement matrix (refer to Patent Literature 1). In Patent Literature 1, a nucleic acid chip having a spatial distribution is prepared using nucleic acid sequences labeled with fluorescent probes, the prepared nucleic acid chip emits multicolor fluorescence signals due to photoexcitation, the emitted multicolor fluorescence signal is sequentially modulated, encoded, and sampled, using an imaging module and an area array detector, and thereby obtaining a fluorescence two-dimensional intensity measurement matrix Y. Then, by performing a reconstruction algorithm, a scaling matrix A, as prior information and the fluorescence two-dimensional intensity measurement matrix Y are correlated and calculated to solve Y=A·X, thereby reconstructing a target signal X, i.e., the spatial, spectral, and intensity distribution information of the fluorescent molecules of the nucleic acid sequences. In the invention disclosed in Patent Literature 1, the area array detector detects fluorescence speckle signals (signals generated by an interference of coherent light diffusely reflected at each point on an illuminated surface due to irregular phase relationships), and a fluorescence weak signal image reconstruction algorithm is mainly used based on a reconstruction algorithm relevant to the speckle field. Thus, the invention disclosed in Patent Literature 1 lacks a technical idea of using modulated fluorescence spectra as feature values.

Moreover, Non-Patent Literature 1 discloses an imaging system using an advanced spectroscopic microscope including a liquid crystal variable retarder and two polarizers sandwiching the retarder. This is configured to use compressed sensing based on the liquid crystal variable retarder and the sensor array, restore a spectrum image cube from a series of spectrally modulated images, and reconstruct a spatial spectrum image cube from fewer spectral scans than those required for the conventional system. Non-Patent Literature 2 discloses a system for capturing hyperspectral images with fewer measurements than required for the conventional system, and a convolutional neural network (CNN) to reconstruct hyperspectral cubes captured via compressed sensing on the basis of spectral modulation. Non-Patent Literature 3 discloses a technology capable of randomly measuring fluorescence signals by applying a spatial random phase modulator to a wide-field microscope.

Moreover, Patent Literature 2 discloses a spectral analysis in which spectral information of a sample is input into a learning model to perform estimation. In the spectral analysis, a response is detected when a stimulus is applied to the sample, thereby making it possible to obtain information regarding the components forming the sample (spectral information) on the basis of the obtained signals. The spectral information used herein is information regarding temperature, mass, and the count number of fragments having specific mass in addition to intensity of electromagnetic waves including light, characterizing the stimulus and the response. However, the spectral information is not obtained by observing the intensity of light which transmits through a filter to which a spectral transmittance varies (is modulated) over time.

Moreover, Patent Literature 3 discloses an optical system including an optical filter and a solid-state imaging element. An embodiment of Patent Literature 3 discloses a dichroic optical filter, which is used in order to split a fluorescence emission spectrum of a fluorescence agent into two spectral channels (e.g., first and second spectral bands). This dichroic optical filter is merely a filter, such as a dichroic mirror, for reflecting light of specific wavelengths and transmitting light of other wavelengths to separate light on the basis of whether it is transmitted or reflected depending on its wavelength. In addition, Patent Literature 3 fails to disclose the quantification of fluorescent dyes using the learned regression model.

Moreover, Patent Literature 4 discloses a process for calculating spectral data of a measurement object by obtaining spectral data for each of a plurality of unit regions multiple times, and averaging the spectral data obtained multiple times for at least one unit region and its adjacent unit regions of a measurement object. In the imaging means of Patent Literature 4, a tunable filter provided in the previous stage of a plurality of pixels temporally varies the transmission wavelength to obtain spectral data for each of a plurality of unit regions on the measurement object at a plurality of pixels. In the tunable filter of Patent Literature 4, since the transmission wavelength is merely varied temporally and the spectral transmittance is not varied temporally, it is clearly different from the modulation. For example, in the case of a tunable filter having 10-nm bandwidth, the transmittance over the entire wavelength range from 400 nm to 1000 nm is approximately 2%. Similar to Patent Literature 3, Patent Literature 4 also fails to disclose the quantification of fluorescent dyes using the learned regression model.

### [Prior Art]

### [Patent Literature]

[Patent Literature 1] WO 2022/057584
[Patent Literature 2] JP 2020-101524 A
[Patent Literature 3] JP 2017-534361 A
[Patent Literature 4] JP 2016-80429 A

### [Non-patent Literature]

[Non-patent Literature 1] T.Yang et al.,"Compressive hyperspectral microscopic imaging using spectral-coded illumination", Optics & Laser Technology Vol.166, 109631 (2023).
[Non-patent Literature 2] D.Gedalin et al.,"DeepCubeNet: reconstruction of spectrally compressive sensed hyperspectral images with deep neural networks", Optics Express Vol.27, Issue 24, pp.35811-35822 (2019).
[Non-patent Literature 3] W.Li et al.,"Single-frame wide-field nanoscopy based on ghost imaging via sparsity constraints", Optica Vol.6, Issue 12, pp.1515-1523 (2019).

### Summary of Invention

### Technical Problem

As described above, spatial transcriptomics analysis detects RNA molecules by hybridizing them with fluorescently labeled probes, and if multiple fluorescent dyes can be used and distinguished simultaneously, it is possible to simultaneously detect a variety of RNA molecules, thereby improving the efficiency of the analysis. In other words, if a plurality of fluorescent dyes can be quantified, it will become possible to improve analysis efficiency even when fluorescent dyes in which fluorescence spectra overlap are used simultaneously.

Moreover, in the sequential RNA fluorescence in situ hybridization method, since the method utilizes an absorption filter, a dye which can be obtained by a single staining operation is limited, but if plurality of fluorescent dyes can be quantified, it becomes possible to significantly reduce the time required from obtaining of a sample (staining operation) to data analysis.

Moreover, the SeqFish+ method also identifies and analyzes a large number of mRNAs through the barcoding using 20 types of pseudo colors through 20 rounds of hybridization, but if the number of fluorescent dyes which can be used simultaneously can be increased without requiring a time amount and effort for obtaining data, it becomes possible to improve analysis efficiency.

In view of such a situation, an object of a present invention is to provide a multiple fluorescent dye quantification method and a device for rapidly and stably quantifying a spectral intensity of fluorescent emission by increasing the number of fluorescent dyes that can be used simultaneously.

### Solution to Problem

In order to solve the above-described problems, a multiple fluorescent dye quantification method of a first aspect of the present invention includes, for an observed object including a plurality of fluorescent dyes, observing intensity integrated in a wavelength direction using a sensor array through a filter having modulated spectral transmittance. The method further includes defining sets of observations obtained under N types of modulation (where N is an integer equal to or greater than 2) as an N-dimensional feature vector, and quantifying the fluorescent dyes and reconstructing intensity images of each fluorescence by using a regression model learned with feature vectors obtained under the same N types of modulation for each fluorescent dye.

Here, a fluorescence spectrum of each fluorescent dye in the observed object is transmitted through the filter having modulated spectral transmittance in accordance with the filter's spectral transmittance, and light passing through this filter is integrated by the sensor array in the wavelength direction, thereby the intensity is observed. Since the intensity is different in accordance with the spectral transmittance and the fluorescence spectra, observed values obtained here vary in accordance with the modulation of the spectral transmittance and the spectral distribution of the fluorescence spectrum, and thereby a plurality of observed values are obtained. This set of observations is defined as a vector and used as a feature vector for quantifying the fluorescent dye. The amount of each fluorescent dye is quantified to estimate the fluorescence intensity. In order to increase the amount of information of the observed values, the spectral transmittance of the filter is modulated so that the spectral distribution of each fluorescent dye becomes a distinct combination of spectral transmittances. By observing under various spectral transmittances, the intensity vector to be observed is specific to the fluorescent dye, and can be used as a feature vector for quantifying the fluorescence. Moreover, the regression model is a model for performing supervised learning, which is a machine learning model for predicting unknown instances (observed values).

According to the present invention, since the fluorescent dyes can be quantified using the feature vectors, it is possible to significantly reduce memory and calculation costs required for a computer. Moreover, since the fluorescent dye can be quantified without measuring the precise spectral distribution of the sample, there is no need for a multispectral or hyperspectral camera, and therefore it is possible to use a general-purpose camera (camera capable of observing intensity integrated in the wavelength direction using a sensor array). Furthermore, since the spectral transmittance can be maintained at approximately 40% unlike a case where hyperspectral cameras or the like are used, it is possible to implement observation with high intensity and low noise, even in the case of weak fluorescence.

Here, in the multiple fluorescent dye quantification method according to the first aspect of the present invention, it is preferable that the spectral transmittance is within a range from 20% to 40%.

It is to be noted that, for the fluorescent dyes used herein, the wavelength of light is not limited only to that of visible light, and it is possible to cover a range from ultraviolet light to infrared light (including near-infrared light) in addition to the visible light.

In the multiple fluorescent dye quantification method according to the first aspect of the present invention, it is preferable that the learning is sparse modeling. Here, the sparse modeling is to assume sparsity with respect to the composition of the observed object (observed object can be represented by superposition of a small number of factors), and there is an advantage that stable regression estimate can be realized even from a small number of features. Therefore, it is possible to reduce the time and costs required for observation and its preparation to obtain the feature vectors, and the model can be learned using a smaller amount of data for processing.

Moreover, it is favorable to perform the above-described learning by using the feature vectors of each fluorescent dye contained in the observed object as a dictionary matrix. For example, in the case of the spatial transcriptomics analysis, a plurality of fluorescence can be quantified by using sparse modeling which utilizes, as a dictionary matrix, the feature vectors generated from the spectral distributions of the fluorescent dyes used in the molecular hybridization. In other words, by assuming that the number of fluorescent dyes observed in the same pixel is small, it is possible to realize stable quantification.

In the multiple fluorescent dye quantification method according to the present invention, the learning may be learning of the regression model using a neural network.

In the multiple fluorescent dye quantification method according to the first aspect of the present invention, it preferable that the filter is a spectral modulator and the modulation of the spectral transmittance is performed by controlling a voltage applied to the spectral modulator. It is to be noted that an electro-optic element may be used as the spectral modulator.

Moreover, it is preferable that the above-described filter includes, for example, a liquid crystal variable retarder and two polarizers sandwiching the liquid crystal variable retarder. Any retardation (phase difference) can be realized in accordance with a voltage applied to a nematic liquid crystal of the liquid crystal variable retarder. This is because there is no need to prepare a wavelength plate for each wavelength, the retardation can be switched at high speed, the polarization can be quickly changed, and the spectral transmittance can be modulated.

It is preferable that, as for the voltage applied to the spectral modulator, an applied voltage used for observing the feature vectors is selected in accordance with the spectral distribution group of the fluorescent dyes. Moreover, it is also possible to obtain an optimum voltage waveform using methods, such as cosine similarity or deep learning. By controlling the spectral modulator using an obtained voltage waveform, it is possible to obtain feature vectors capable of quantifying the fluorescent dyes.

For example, the following methods can be used for selecting the applied voltage used for observing the feature vectors in accordance with the spectral distribution group of fluorescent dyes: a method of obtaining a minimum set capable of maintaining sufficient fluorometric quantification accuracy from among a sufficiently large number of voltage candidate groups; and a method of randomly defining N types of voltages (N-dimensional voltage vector) in advance and obtaining the best voltage vector capable of maximizing quantification accuracy using optimization techniques, such as machine learning or gradient descent method.

In the multiple fluorescent dye quantification method according to the first aspect of the present invention, it is possible to determine the number of dimensions of the feature vector so that the quantification accuracy of the reconstructed fluorescence exceeds a predetermined value. The feature vector of the observed image is represented in the form of a vector using pattern information of the luminance values (pixel values) of each pixel in the image, as an element. The feature vector differs each time the spectral transmittance changes, when the fluorescence spectrum of the observed image is observed, through a filter having modulated spectral transmittance, as an intensity integrated in the wavelength direction using a sensor array. The set of observations obtained under N types of modulation is defined as an N-dimensional feature vector, and the number of dimensions may be set to a minimum value wherein the quantification accuracy of the reconstructed fluorescence exceeds a predetermined value, e.g., a value in which PSNR (Peak Signal to Noise Ratio), SNR (Signal to Noise Ratio), or the like, which is an evaluation value of objective quality, exceeded a predetermined value when the quantification accuracy of each fluorescence in each pixel is evaluated.

The multiple fluorescent dye quantification method according to the first aspect of the present invention, may further include a multi-order wavelength plate at a previous stage of the filter to which the spectral transmittance is temporally varied. By providing the multi-order wavelength plate, it is possible to perform an observation offset to a high-frequency wave, thereby performing the quantification of the fluorescent dyes at higher accuracy.

A multiple fluorescent dye quantification method of a second aspect of the present invention includes: for an observed object including a plurality of fluorescent dyes, performing a modulation process for observing intensity integrated in a wavelength direction using a sensor array through a filter having temporally varied spectral transmittance; and defining sets of observations obtained under N types of modulation (where N is an integer equal to or greater than 2) as an N-dimensional feature vector, and quantifying the fluorescent dyes and reconstructing intensity images of each fluorescence by a demodulation process using a regression model learned with feature vectors obtained under the modulation for each fluorescent dye.

In the multiple fluorescent dye quantification method according to the second aspect of the present invention, it is preferable that the learning is sparse modeling. Moreover, it is favorable to perform the above-described learning by using the feature vectors of each fluorescent dye contained in the observed object as a dictionary matrix. Here, in the multiple fluorescent dye quantification method according to the second aspect of the present invention, it is preferable that the spectral transmittance is within a range from 20% to 40%.

In the multiple fluorescent dye quantification method according to the second aspect of the present invention, it preferable that the filter is a spectral modulator and the modulation of the spectral transmittance is performed by controlling a voltage applied to the spectral modulator. Moreover, it is preferable that the above-described filter includes, for example, a liquid crystal variable retarder and two polarizers sandwiching the liquid crystal variable retarder.

In the multiple fluorescent dye quantification method according to the second aspect of the present invention, it is preferable that, as for the voltage applied to the spectral modulator, an applied voltage used for observing the feature vectors is selected in accordance with the spectral distribution group of the fluorescent dyes.

In the multiple fluorescent dye quantification method according to the second aspect of the present invention, it is possible to determine the number of dimensions of the feature vector so that the quantification accuracy of the reconstructed fluorescence exceeds a predetermined value.

The multiple fluorescent dye quantification method according to the second aspect of the present invention, may further include a multi-order wavelength plate at a previous stage of the filter to which the spectral transmittance is temporally varied.

A multiple fluorescent dye quantification device according to the present invention includes: a filter configured to modulate spectral transmittance; a filter control unit configured to control the filter; a sensor array configured to observe intensity of an observed object including a plurality of fluorescent dyes through the filter; a storage unit configured to store an observed value of the sensor array observed under N types of modulation (where N is an integer equal to or greater than 2), as an N-dimensional feature vector; and a regression model configured to be learned using the feature vector under the modulation for each fluorescent dye, and to quantify the fluorescent dye to reconstruct an intensity image of each fluorescence.

The filter control unit selects a voltage group used for the observation in accordance with a type of the fluorescent dye, and modulates the spectral transmittance.

According to the present invention, there is an effect that the number of fluorescent dyes which can be used simultaneously is increased, and the spectral intensity of fluorescent emission can be quantified rapidly and stably.

In particular, in the spatial omics analysis etc., the number of times of staining or imaging can be reduced, leading to a reduction in device operating time, and producing cost reduction effect in experimental procedures. Moreover, it can be applied to all fields of bio-imaging using fluorescence techniques, not limited to the spatial omics analysis, and therefore can be applied to various applications.

Moreover, there is a risk of the quality of a sample deteriorating during operation according to current technologies requiring multiple staining and imaging. However, according to the present invention, since it becomes possible to detect many dyes in a single staining and imaging process, there is an effect that the quality of the sample can be maintained for a longer time period. The present invention is also compatible with new fluorescent dyes, and as the development of new fluorescent dyes progresses, it is possible to incorporate new fluorescent dyes, and the adaptability is high.

Furthermore, according to the present invention, since the fluorescence can be quantified by the feature vector without using three-dimensional spectral images obtained by a spectral mechanism or compressed sensing, it is possible to significantly reduce memory and calculation costs, and it is possible to quantify the fluorescent emission without requiring precise measurement of the spectral distribution of the quantified object.

### Brief Description of Drawings

[Fig. 1] A functional block diagram of a multiple fluorescent dye quantification device.
[Fig. 2] A schematic flow chart of a multiple fluorescent dye quantification method.
[Fig. 3] A schematic explanatory diagram of the multiple fluorescent dye quantification device.
[Fig. 4] A comparison graphic chart of fluorescence spectra of each dye.
[Fig. 5] Examples of spectral transmittance generated by a spectral modulator.
[Fig. 6] An explanatory diagram of encoding.
[Fig. 7] Observation results of intensity integrated in a wavelength direction using a sensor array through a filter having modulated spectral transmittance.
[Fig. 8] Comparison graphic charts of spectral distributions and feature vectors obtained by modulating spectral transmittance, when observing fluorescent dye with different fluorescence spectra under various voltages.
[Fig. 9] An explanatory diagram of sparse modeling using feature vectors as a dictionary.
[Fig. 10] An explanatory diagram of simulation using the multiple fluorescent dye quantification method.
[Fig. 11] Simulation results of the multiple fluorescent dye quantification method.
[Fig. 12] A graphic chart illustrating a correlation between the number of observations and reconstruction quality.
[Fig. 13] An explanatory diagram of an optimization method for the number of observations.
[Fig. 14] A comparison graphic chart between sparse modeling and random selection regarding a correlation between the number of observations and error.
[Fig. 15] A functional block diagram of a multiple fluorescent dye quantification device according to Example 4.
[Fig. 16] A schematic explanatory diagram of the multiple fluorescent dye quantification device according to Example 4.
[Fig. 17] Comparison graphic charts of spectral transmittance with regard to the presence or absence of the multi-order wavelength plate.

### Description of Embodiments

Hereinafter, an example of embodiments of the present invention will be described in detail with reference to the drawings. It is to be noted that the scope of the present invention is not limited to the following Examples or illustrated examples, and that many modifications and variations can be envisaged.

### [Example 1]

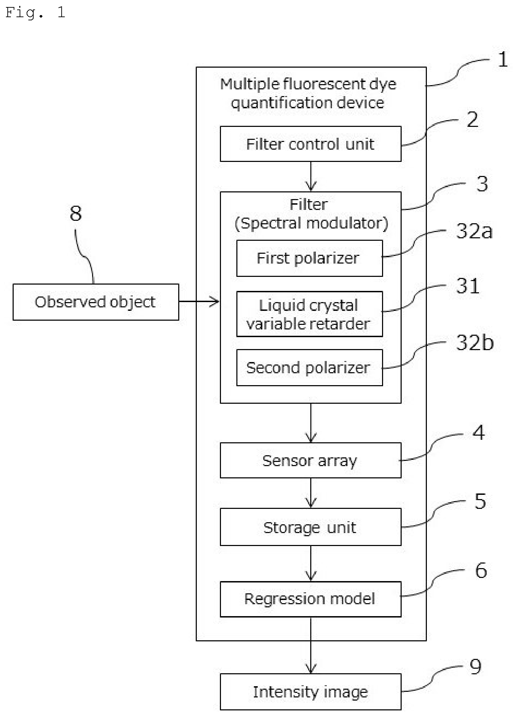

Fig. 1 illustrates a functional block diagram of a multiple fluorescent dye quantification device according to Example 1. As illustrated in Fig. 1, the multiple fluorescent dye quantification device 1 includes a filter control unit 2, a filter (also referred to as a spectral modulator) 3, a sensor array 4, a storage unit 5, and a regression model 6.

The filter control unit 2 controls a voltage applied to the spectral modulator 3. The spectral modulator 3 modulates spectral transmittance and includes a first polarizer 32a, a liquid crystal variable retarder 31, and a second polarizer 32b. The sensor array 4 observes an observed object 8 including a plurality of fluorescent dyes through the spectral modulator 3. The storage unit 5 stores a luminance value of a camera pixel imaged under N types of modulation (where N is an integer of equal to or greater than 2; in this example, N=200), as an N-dimensional feature vector. The regression model 6 is learned using the feature vector under the modulation for each fluorescent dye, and quantifies the fluorescent dye to reconstruct an intensity image 9 of each fluorescence.

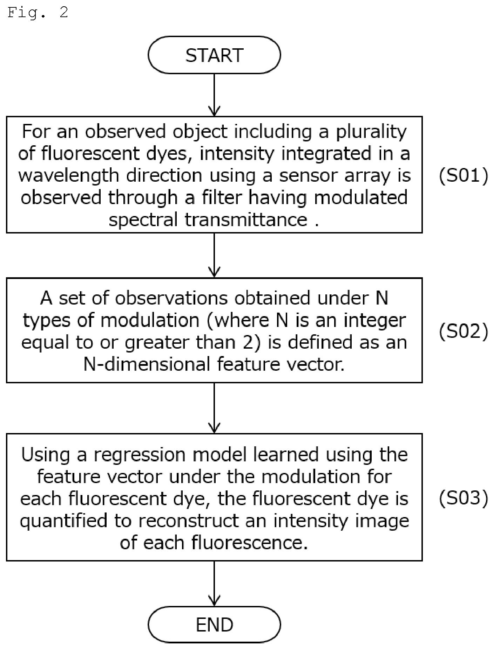

Fig. 2 illustrates a schematic flow chart of a multiple fluorescent dye quantification method according to Example 1. As illustrated in Fig. 2, for an observed object including a plurality of fluorescent dyes, intensity integrated in a wavelength direction using a sensor array is observed through a filter having modulated spectral transmittance (Step S01). A set of observations obtained under N types of modulation (in this example, N=200) is defined as an N-dimensional feature vector (Step S02). Using a regression model learned using the feature vector under the modulation for each fluorescent dye, the fluorescent dye is quantified to reconstruct an intensity image of each fluorescence (Step S03).

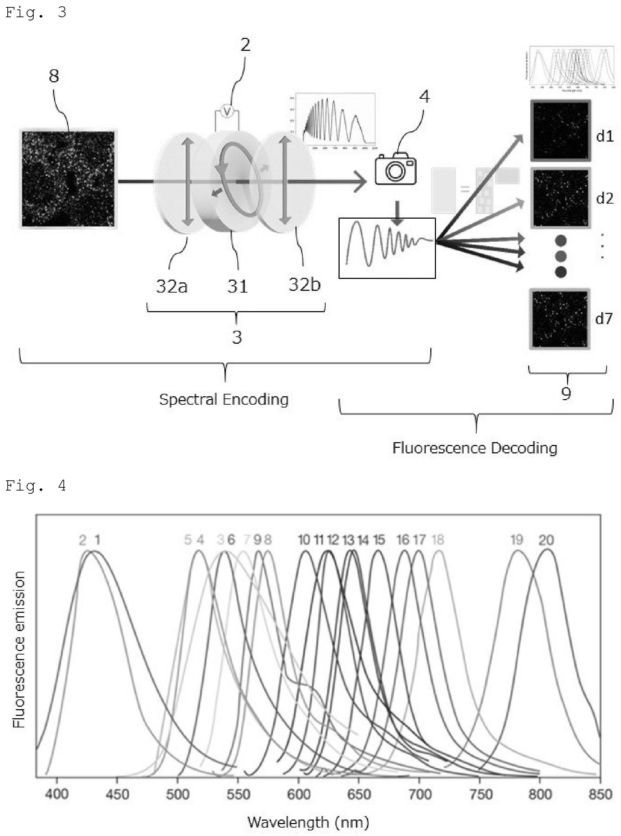

Fig. 3 illustrates a schematic explanatory diagram of the multiple fluorescent dye quantification device. The liquid crystal variable retarder 31 illustrated in Fig. 3 is disposed in a manner that serves a role similar to a color filter disposed at a previous stage of an image sensor or the like. The liquid crystal variable retarder 31 is an element capable of varying the spectral transmittance (spectral transmission characteristics) by applying a voltage, thereby implementing modulation of the spectral transmittance.

As illustrated in Fig. 3, in the spectral encoding, while varying the voltage to be applied to the liquid crystal variable retarder 31 by the filter control unit 2, the observed object 8 is imaged by the sensor array 4 through the spectral modulator 3, and the obtained set of observations is defined as a 200-dimensional feature vector. Seven types of fluorescent dyes are used for the observed object 8.

In the fluorescence decoding, on the basis of the 200-dimensional feature vector obtained from the obtained set of observations, the regression model 6, which is learned using feature vectors under modulation in the seven types of fluorescent dyes, is used to quantify the fluorescent dyes and reconstruct the intensity image for each fluorescence.

By combining the encoding and the decoding, a plurality of fluorescent dyes can be precisely identified and efficiently imaged, even when a large number of types of fluorescent dyes are used.

Fig. 4 illustrates a comparison graphic chart of the fluorescence spectra of each dye (Source: https://www.thermofisher.com/jp/ja/home/brands/molecular-probes/key-molecular-probes-products/alexa-fluor/alexa-fluor-dyes-across-the-spectrum.html, Refer to Fig. 1). When observing dyes having fluorescence spectra numbered 1 to 20 illustrated in Fig. 4, it can be demonstrated that the dyes cover a wide spectral range including near-ultraviolet, visible, and near-infrared regions, and each dye has a variety of fluorescence spectra. However, it is demonstrated that, for example, in the case of dye No. 13 and dye No. 14, both fluorescence spectra are similar and therefore it is difficult to quantify these fluorescent dyes when observed without the spectral modulator 3.

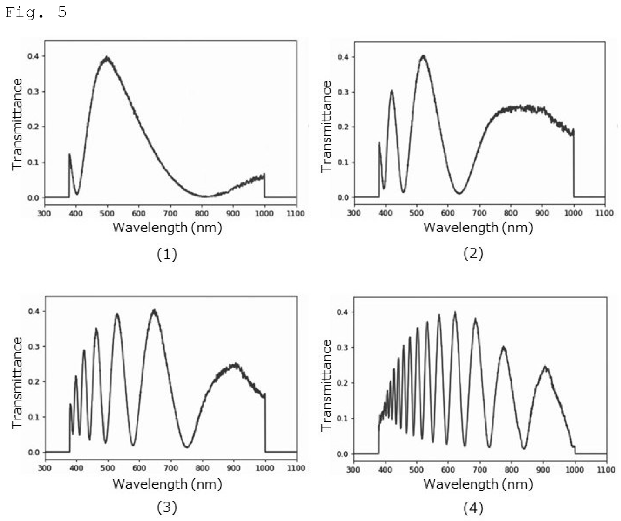

Fig. 5 illustrates an example of spectral transmittance by a spectral modulator. In Fig. 5, the horizontal axis represents wavelength, and the vertical axis represents transmittance, illustrating an aspect that the spectral transmission characteristics vary from Figs. 5(1) to 5(4). The spectral transmittance can be modulated by varying a voltage applied to the liquid crystal variable retarder 31 in the filter control unit 2. As described above, this example performed the quantification of fluorescent dyes for seven different fluorescent dyes having different fluorescence spectra, using 200 types of modulation.

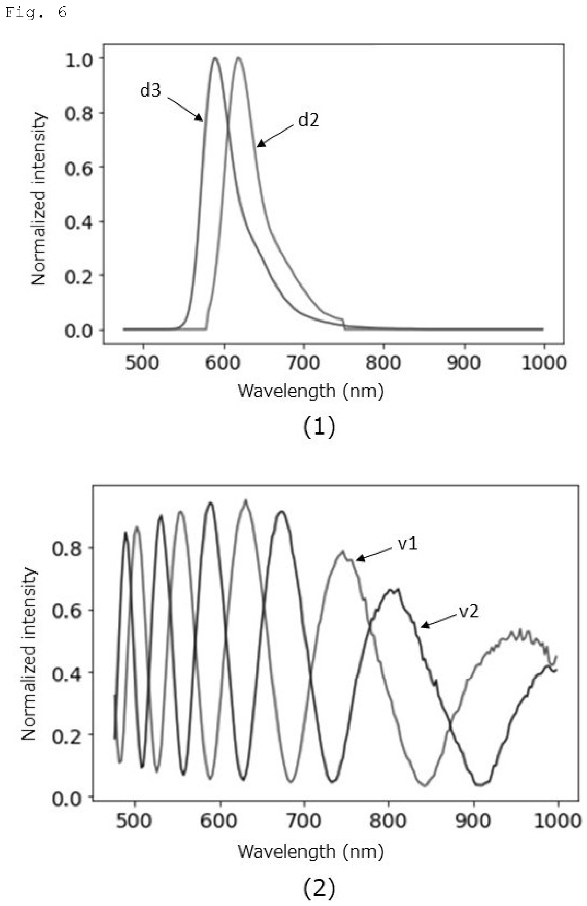

Fig. 6 is an explanatory diagram of the encoding; Fig. 6(1) illustrates spectral distributions observed at various voltages for two fluorescent dyes having different fluorescence spectra, and Fig. 6(2) illustrates a comparison graphic chart illustrating a case where the spectral transmittance is varied in the spectral modulator.

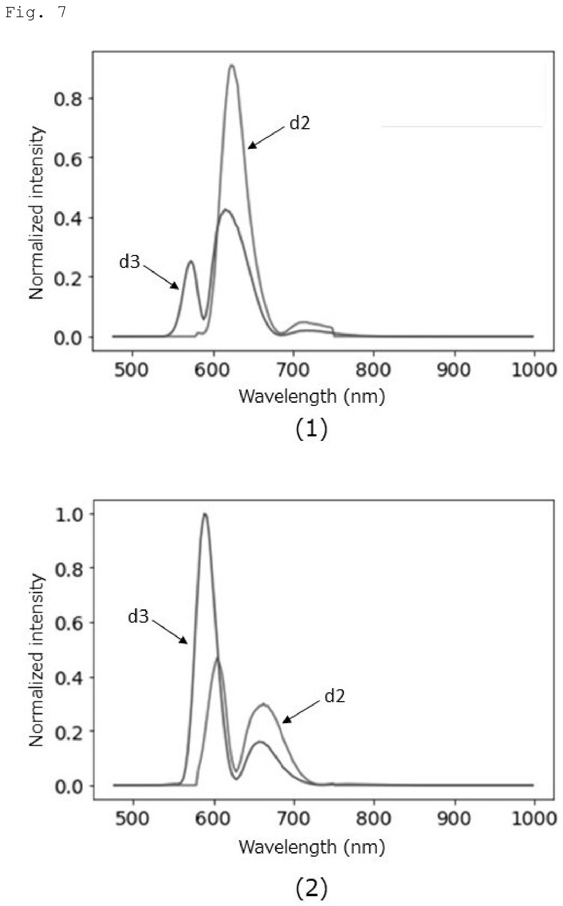

Moreover, Fig. 7 illustrates the observed results of intensity integrated in a wavelength direction using a sensor array through a filter having modulated spectral transmittance; Fig. 7(1) illustrates a case where the object is imaged by applying a voltage v1, and Fig. 7(2) illustrates a case where the object is imaged by applying a voltage v2.

As illustrated in Fig. 6(1), the fluorescence spectra of dye d2 and dye d3 seem to be similar. However, as illustrated in Fig. 6(2), when the spectral transmittance of the spectral modulator 3 is varied by applying voltages v1, v2 and the object is imaged, the imaged results differ. As illustrated in Fig. 7(1), when the object is imaged with the voltage v1 applied, the intensity at the peak position of dye d2 is 0.9 or greater, but the intensity at the peak position of dye d3 is approximately 0.4. Moreover, as illustrated in Fig. 7(1), when the object is imaged with voltage v2 applied, the intensity at the peak position of dye d2 is approximately 0.5, but the intensity at the peak position of dye d3 is approximately 1.0.

Thus, even for dyes having different fluorescence spectra, by performing the observation while varying the spectral transmittance using the spectral modulator 3, the differences in the obtained spectral distributions are clarified, thereby facilitating the discrimination and quantification of the fluorescent dyes.

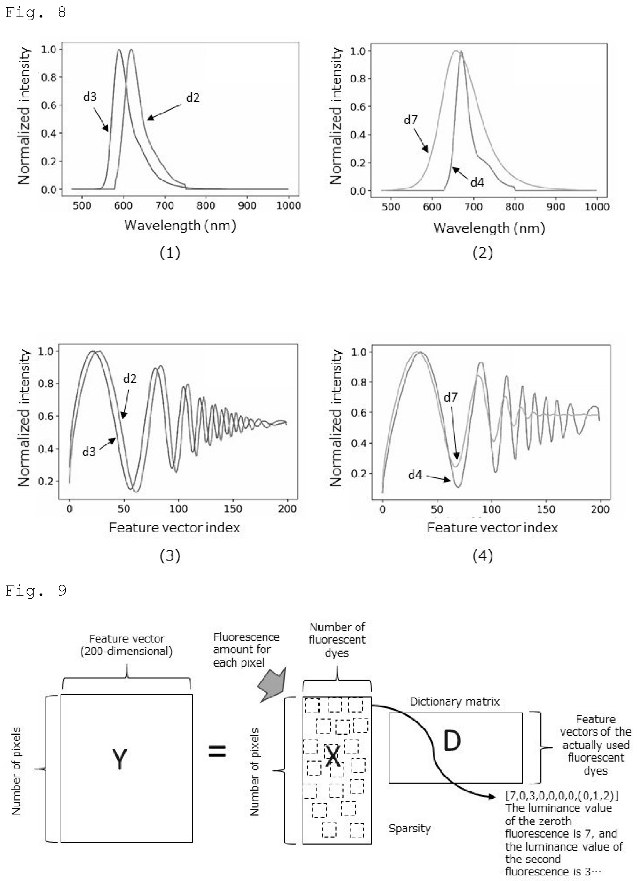

Fig. 8 illustrates comparison graphic charts of spectral distributions and feature vectors obtained by modulating spectral transmittance, when observing fluorescent dyes with different fluorescence spectra under various voltages. Fig. 8(1) illustrates the spectral distribution of the fluorescent dyes having proximate peaks, Fig. 8(2) illustrates the spectral distribution of fluorescent dyes having substantially same peaks but different spreads, Fig. 8(3) illustrates the feature vectors of fluorescent dyes having proximate peaks, and Fig. 8(4) illustrates the feature vectors of fluorescent dyes having substantially same peaks but different spreads.

As the dye d2 and the dye d3 illustrated in Fig. 8(1), when peak positions are shifted, the intensity of light observed at each voltage differs, and as illustrated in Fig. 8(3), the feature vectors obtained respectively by modulating the spectral transmittances are also shifted. Moreover, as in the case of the dye d4 and the dye d7 illustrated in Fig. 8(2), even when the peaks are substantially the same, the difference becomes clear in the feature vectors obtained respectively by modulating the spectral transmittances, as illustrated in Fig. 8(4). Thus, by performing the observation by varying the voltage applied to the liquid crystal variable retarder 31, it is possible to discriminate and quantify even fluorescent dyes having extremely similar fluorescence spectra.

Fig. 9 illustrates an explanatory diagram of sparse modeling using feature vectors as a dictionary matrix.

As the feature vector of the horizontal axis, this example uses a group of 200 observed images obtained under 200 types of modulation, and can create a matrix Y on the basis of the number of pixels on the vertical axis and the aforementioned feature vectors.

The dictionary matrix D is the feature vectors of the actually used fluorescent dyes, and the fluorescence spectra are identified by identifying the dyes to be used, and the intensity can be created on a simulation basis when being observed under each modulation.

Moreover, a matrix X representing the amount of each fluorescent dye observed at each pixel is created, and the product of X and D is calculated, making it possible to express by the linear equation Y=X·D. Here, the matrix X represents the fluorescence amount (luminance value) for each pixel, and the number of rows is the number of pixels, and the number of columns is the number of fluorescent dyes. For example, in a case where an observed image includes seven types of fluorescent dyes, if the values of the row for a certain pixel are [7, 0, 3, 0, 0, 0, 0], the fluorescence of the seven types (numbers 0 to 6) is quantified as follows: the luminance value of the zeroth fluorescence is 7, and the luminance value of the second fluorescence is 3.

The matrix Y is obtained through observation, and the dictionary matrix D can be created by identifying the fluorescent dye to be used. What is necessary is to solve for the matrix X from these two matrices. Thus, by solving the linear equation, it is possible to analyze which fluorescent dyes are present at each pixel and in what amounts.

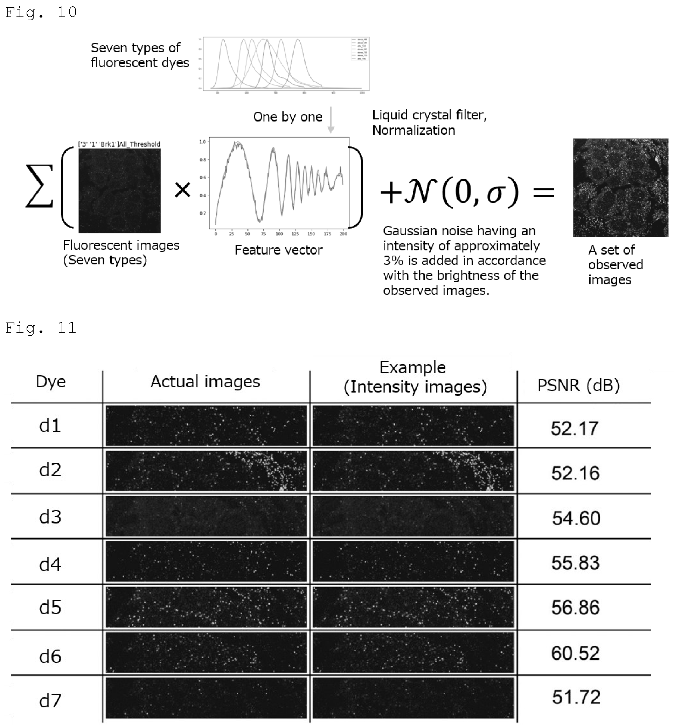

Fig. 10 illustrates an explanatory diagram of a simulation using the multiple fluorescent dye quantification method according to Example 1. In the simulation, seven types of fluorescent dyes are used, and a group of observed images was created using the liquid crystal variable retarder 31. The (seven types of) fluorescent images are actual observed images obtained by imaging seven types of RNA.

The group of images obtained when seven types of RNA, each labeled with a different fluorescent dye, are observed under varying voltages can be synthesized by multiplying the intensity of each pixel in the RNA observed images by the feature vector of the fluorescent dye used for the labeling. When seven types of fluorescent dyes are observed simultaneously under a given voltage, the obtained image is the sum of the observed images of each fluorescence obtained at that voltage. Since actual observations contain noise, Gaussian noise having an intensity of approximately 3% is added in accordance with the brightness of the observed images.

Fig. 11 illustrates simulation results of the multiple fluorescent dye quantification method according to Example 1. A group of observed images was created by the method illustrated in Fig. 10, fluorescence decoding was performed, thereby obtaining the intensity images illustrated in Fig. 11.

Comparing the actual images and the obtained intensity images for the seven types of fluorescent dyes (d1 to d7), the Peak Signal-to-Noise Ratio (PSNR), which represents the ratio of maximum power to noise, was equal to or greater than 50 dB for all dyes. Moreover, it is demonstrated that the inverse problem can be further solved as the observed images become indistinguishable by visual observations.

### [Example 2]

In the Example 1 described above, the number of observations is set to 200, but this example describes the results of clarifying the correlation between the number of observations and the reconstruction quality by varying the number of observations, comparing the obtained intensity images with the actual images using the same seven types of fluorescent dyes as in Example 1, and showing the resulting changes in the PSNR.

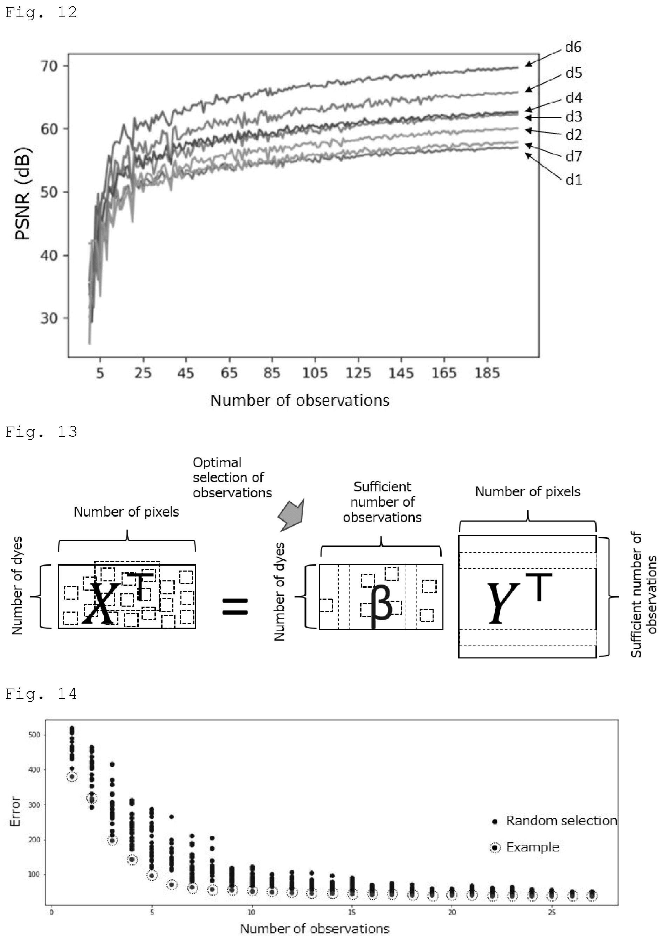

Fig. 12 is a graphic chart illustrating a correlation between the number of observations and reconstruction quality. As illustrated in Fig. 12, it is demonstrated that for all dyes (d1 to d7), the PSNR increases as the number of observations increases. However, even with approximately 25 observations, the PSNR remains at equal to or greater than 50 dB, indicating that sufficient reconstruction quality is realized.

### [Example 3]

Next, described is an optimization method for the number of observations when the number of observations is reduced, i.e., how to set the voltage for each observation point.

Fig. 13 illustrates an explanatory diagram illustrating the optimization method of the number of observations. In Fig. 13, "X^{T}" denotes the transposed matrix of matrix X in the equation Y=X·D described with reference to Fig. 9 in Example 1, and "Y^{T}" denotes the transposed matrix of matrix Y. Moreover, a matrix β is a matrix obtained by interchanging the rows and columns of the dictionary matrix illustrated in Fig. 9, and the number of rows corresponds to the number of fluorescent dyes, and the number of columns corresponds to the optimal number of observations.

Here, it is assumed that the fluorescent intensity images (X) corresponding to each dye can be expressed by taking a linear sum of a small number of images (Y) observed under various voltages. The coefficient matrix in this linear sum is defined as β. When solving for matrix β, regularization is applied so that the elements of many columns are set to zero. The observations corresponding to columns where all elements are zero can be considered unnecessary for the estimation of fluorescent intensity images. By adjusting the strength of the regularization, the number of observations can be increased/decreased, and the error can be estimated by evaluating the difference between X^{T} and β·Y^{T}.

Fig. 14 illustrates a graphic chart comparing, regarding the correlation between the number of observations and the error, between the case where optimization is performed by sparse modeling and the case where observations are selected randomly. In other words, the location of each dye in each pixel is represented by a linear combination of observed images, and by applying sparse modeling, the location and quantity of each dye are reconstructed using as few observed images as possible. By solving the problem of identifying which observations sufficiently reconstruct when the actual location and quantity of the dye is expressed using a minimal number of observations, it estimates the quantity and location of each dye in each pixel using as few observed images as possible.

As illustrated in Fig. 14, it is demonstrated that, unlike the random selection, the multiple fluorescent dye quantification method according to the present invention realizes a sufficient reduction in error with a small number of observations of approximately 7 to 8, and demonstrates higher performance compared to random selection at the same number of observations.

### [Example 4]

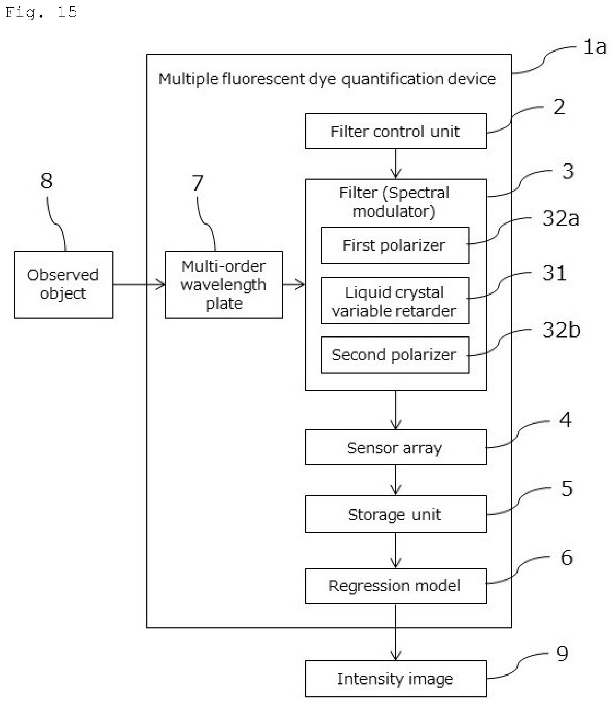

Fig. 15 illustrates a functional block diagram of a multiple fluorescent dye quantification device according to Example 4. As illustrated in Fig. 15, the multiple fluorescent dye quantification device 1a includes a filter control unit 2, a filter 3, a sensor array 4, a storage unit 5, a regression model 6, and a multi-order wavelength plate 7. The filter control unit 2, the filter 3, the sensor array 4, the storage unit 5, or the regression model 6 is the same as that included in the multiple fluorescent dye quantification device 1 according to Example 1.

Unlike the multiple fluorescent dye quantification device 1 according to Example 1, the multiple fluorescent dye quantification device 1a is provided with the multi-order wavelength plate 7 between the filter 3 and the observed object 8. The multi-order wavelength plate 7 is a wavelength plate in which the optical path retardance is shifted by an integer multiple of the wavelength in addition to the design retardance, and has an advantage in that it can be implemented at a lower cost than a zero-order wavelength plate. The sensor array 4 observes an observed object 8 including a plurality of fluorescent dyes through the spectral modulator 3 and the multi-order wavelength plate 7. By providing the multi-order wavelength plate 7 between the filter 3 and the observed object 8, it is possible to perform an observation offset to a high-frequency wave, thereby performing the quantification of the fluorescent dyes at higher accuracy.

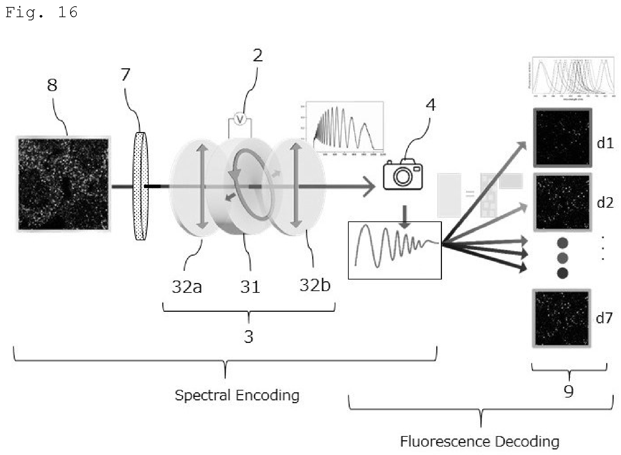

Fig. 16 illustrates a schematic explanatory diagram of the multiple fluorescent dye quantification device according to Example 4. As illustrated in Fig. 16, in the spectral encoding, while varying the voltage to be applied to the liquid crystal variable retarder 31 by the filter control unit 2, the observed object 8 is imaged by the sensor array 4 through the multi-order wavelength plate 7 and the spectral modulator 3, and the obtained set of observations is defined as a 200-dimensional feature vector.

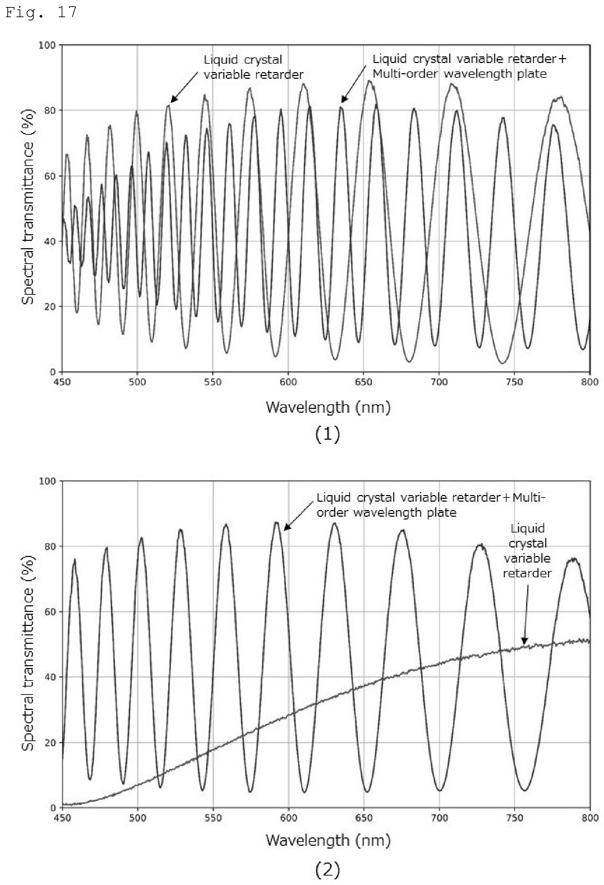

Fig. 17 illustrates graphic charts showing a comparison of spectral transmittance between the case where the multi-order wavelength plate 7 is provided at the previous stage of the liquid crystal variable retarder 31 and the case where it is not provided. Fig. 17(1) illustrates the case where the applied voltage is 1 V, and compared to the spectral transmittance using only the liquid crystal variable retarder 31, providing the multi-order wavelength plate 7 at the previous stage of the liquid crystal variable retarder 31 results in more significant variation in spectral transmittance with respect to wavelength. The more significant this variation is, the more effective it is for discriminating and quantifying fluorescent dyes with small differences in their spectra. Fig. 17(2) illustrates the case where the applied voltage is 10 V, and in particular, while the spectral transmittance using only the liquid crystal variable retarder 31 varies very gradually with respect to wavelength, the configuration in which the multi-order wavelength plate 7 is provided at the previous stage of the liquid crystal variable retarder 31 exhibits a greater variation in spectral transmittance with respect to wavelength. The spectral transmittance patterns crucial for discriminating fluorescent dyes depend on the types of dyes to be discriminated and quantified; however, by using the multi-order wavelength plate 7 in combination, the variety of selectable spectral transmittance patterns can be increased, thereby enabling improvement in both discrimination and quantification performance.

### (Other Examples)

In the regression model, deep learning may be used to learn the trends of each pixel on the basis of its proximity relationship.

### Industrial Applicability

The present invention is useful as a technique for simultaneously utilizing and identifying a plurality of fluorescent dyes in bio-imaging, such as spatial omics analysis.

### Reference Signs List

1,1a: Multiple fluorescent dye quantification device;
2: Filter control unit;
3: Filter (Spectral modulator);
4: Sensor array;
5: Storage unit;
6: Regression model;
7: Multi-order wavelength plate;
8: Observed object;
9: Intensity image;
31: Liquid crystal variable retarder;
32a: First polarizer;
32b: Second polarizer;
d1 to d7: Dye; and
v1, v2: Voltage.

## Claims

1. A multiple fluorescent dye quantification method comprising:
observing, for an observed object including a plurality of fluorescent dyes, an intensity integrated in a wavelength direction using a sensor array through a filter having modulated spectral transmittance;
defining a set of observations obtained under N types of modulation, where N is an integer equal to or greater than 2, as an N-dimensional feature vector; and
quantifying the fluorescent dyes and reconstructing intensity images of each fluorescence using a regression model learned with the feature vectors obtained under the N types of modulation for each fluorescent dye.

2. The multiple fluorescent dye quantification method according to claim 1, wherein the learning uses the feature vector of each fluorescent dye contained in an observed object as a dictionary matrix.

3. The multiple fluorescent dye quantification method according to claim 1 or 2, wherein the learning is sparse modeling.

4. The multiple fluorescent dye quantification method according to claim 1, wherein the filter is a spectral modulator, and the modulation modulates the spectral transmittance by controlling an applied voltage of the spectral modulator.

5. The multiple fluorescent dye quantification method according to claim 1, wherein the filter includes a liquid crystal variable retarder and two polarizers sandwiching the liquid crystal variable retarder.

6. The multiple fluorescent dye quantification method according to claim 4, wherein, in the spectral modulator, the applied voltage used for observing the feature vectors is selected in accordance with a spectral distribution group of the fluorescent dye.

7. The multiple fluorescent dye quantification method according to claim 3, wherein the number of dimensions of the feature vector is selected so that the quantification accuracy of the reconstructed fluorescence exceeds a predetermined value.

8. The multiple fluorescent dye quantification method according to claim 1, wherein the spectral transmittance is within a range from 20% to 40%.

9. The multiple fluorescent dye quantification method according to claim 1, wherein the filter further comprises a multi-order wavelength plate.

10. A multiple fluorescent dye quantification method comprising:
performing, for an observed object including a plurality of fluorescent dyes, a modulation process in which an intensity integrated in a wavelength direction is observed using a sensor array through a filter having temporally varied spectral transmittance;
defining a set of observations obtained under N types of modulation, where N is an integer equal to or greater than 2, as an N-dimensional feature vector; and
quantifying the fluorescent dyes and reconstructing intensity images of each fluorescence by a demodulation process using a regression model learned with the feature vectors obtained under the modulation for each fluorescent dye.

11. A multiple fluorescent dye quantification device comprising:
a filter configured to modulate spectral transmittance;
a filter control unit configured to control the filter;
a sensor array configured to observe intensity of an observed object including a plurality of fluorescent dyes through the filter;
a storage unit configured to store an observed value of the sensor array observed under N types of modulation, where N is an integer equal to or greater than 2, as an N-dimensional feature vector; and
a regression model configured to be learned using the feature vector under the modulation for each fluorescent dye, and to quantify the fluorescent dye to reconstruct an intensity image of each fluorescence.

12. The multiple fluorescent dye quantification device according to claim 11, wherein the filter control unit selects a voltage group used for the observation in accordance with a type of the fluorescent dye, and modulates the spectral transmittance.
